**Europäisches Patentamt**

**European Patent Office**

**Office européen des brevets**

(19)

(11) **EP 1 462 960 A2**

(12) **EUROPEAN PATENT APPLICATION**

(43) Date of publication:
**29.09.2004 Bulletin 2004/40**

(51) Int Cl.⁷: **G06F 17/30**

(21) Application number: **04006605.2**

(22) Date of filing: **18.03.2004**

| | |
|---|---|
| (84) Designated Contracting States: **AT BE BG CH CY CZ DE DK EE ES FI FR GB GR HU IE IT LI LU MC NL PL PT RO SE SI SK TR** Designated Extension States: **AL LT LV MK** | (72) Inventors:<br>• **Narayanan, Charumathy** Sammamish Washington 98074 (US)<br>• **Singh, Ram P.** Sammamish Washington 98074 (US)<br>• **Parham, Jeffrey B.** Redmond Washington 98053 (US) |
| (30) Priority: **27.03.2003 US 401214** | |
| (71) Applicant: **MICROSOFT CORPORATION** Redmond, Washington 98052 (US) | (74) Representative: **Grünecker, Kinkeldey, Stockmair & Schwanhäusser Anwaltssozietät Maximilianstrasse 58 80538 München (DE)** |

(54) **Consistency unit replication in application-defined systems**

(57)    Architecture for replicating a consistency unit in an application-defined system. Changes in a source replica effect metadata changes in both a change unit and the associated consistency unit. In response to a synchronization request by a destination, the source enumerates an updated consistency unit, enumerates all updated change units of the consistency unit, bundles the change units, and sends the bundles the change units for transmit to the destination. The destination applies the bundled change units in a single transaction after detecting and resolving conflicts. The process continues for each change.

FIG. 1

EP 1 462 960 A2

**Description**

TECHNICAL FIELD

This invention is related to data replication systems, and more specifically, to the replication of data in application-defined regimes.

BACKGROUND OF THE INVENTION

Since the advent of the Internet, the need to replicate data sets of a number of disparate systems has become increasingly important. Replication provides for greater data redundancy in the case of faults. Replication further provides for increased data availability, increased load balancing, and increased geographic proximity between users and data.

State-based replication systems utilize a term called a consistency unit that defines a set of tightly consistent data. "Tightly consistent" means that a given replica contains all or none of the data in a consistency unit, which frees consumers of the data from having to compensate for cases in which only part of the data might be present.

The idea of consistency units in state-based replication systems is not new. Most such systems define some notion of a consistency unit, but one that is fixed at a low level, that is, for example, all data in a physical row within a table is transmitted and applied together. These systems force application writers either to tailor their data to fit the system's pre-defined low-level consistency unit (which is not always possible) or to write additional code to detect and to handle data inconsistencies, e.g., to deal with the replicated data not being tightly consistent.

Application-defined consistency units, as the name suggests, grant applications the capability to prescribe the boundaries of tight consistency to the replication system. Such an application is then free to model its data in whatever manner is most suitable to it (rather than the manner that is most suitable to the replication system) while alleviating the complexity of handling inconsistent states.

A change unit, in contrast to a consistency unit, is the granularity of data at which conflict detection and resolution is applied, and therefore, the granularity at which "change history" is maintained. In most state-based replication systems the change unit is fixed to one granularity or to one of a small set of granularity options, such as a physical row or column.

While it is possible to define a system in which the change unit and the consistency unit are the same, it is sometimes desirable for them to be different - or, more specifically, for a consistency unit to contain more than one change unit. For example, consider a first replica R1 and a second replica R2 of a Customer, Order, and Order Details database. If customer data, order data, and order details data are created on the first replica R1, it is preferable that the data should be replicated and applied together as a unit on the second replica R2. That is, the consistency unit in this scenario consists of the customer data, all orders data by that customer, and the order details data of all the customer orders. Now suppose that later in time the billing address for the customer is updated on the first replica R1 and, before replication of this change occurs to the second replica R2, a new order for the customer is entered on R2. The desired result is that when replication quiesces, both replicas R1 and R2 have the new billing address and the new order. This result requires that these two updates not conflict, which suggests that the billing address should be in a change unit that is distinct from that of the new order. Other examples exist to illustrate the need for the distinction between the granularity of change units and consistency units, including limiting replication bandwidth, etc. Note also that several modern state-based replication systems allow consistency units to contain multiple change units.

Existing replication schemes that allow multiple sites to update the data typically replicate net changes of physical table rows, wherein the detection and resolution of conflicts occur at the granularity of a row or a column in a physical table. However, there is a need to replicate rows that are semantically related, since they are part of the same business object. Traditional replication technologies that propagate net changes to destination replicas may propagate changes to multiple rows in the form of multiple tables, which are semantically related by business logic, and may be applied at different times and as part of different transactions. However, these schemes do not guarantee the preservation of consistency across rows that are grouped at a "business object" level.

Consider again synchronization of the data set that contains rows from three database tables: Customers, Orders, and Order Details. Assume that the user application inserts a new Customer along with new Orders and new Order Details. Traditionally, replication does not guarantee the preservation of the order of applying these changes at a different replica, but may propagate the inserts to the Customers table, followed by the inserts to the Orders tables, and then finally, the inserts to the Order Details table. If there is either a failure or a significant delay between applying the Orders changes and the Order Details changes, it may look like some of the Orders have no Order Details or only partial details may be seen for some Orders. (This condition would normally only be transient and would be resolved the next time synchronization completes successfully.) However, if the application requires that all records logically related are either wholly absent or wholly present at a given time at any site, as previously defined in accordance with an application-based consistency unit, then the presence of only a partial data set will be problematic. By way of another example, if there were two applications (or two instances of the same application) running on the system-the first performing updates on replica R1, and the second reading information from Replica R2, the goal is that the application reading from replica R2 can rely on tight consistency of the business objects there, and without restricting the way in which the applications model their business objects in the database.

Increasingly there is a need in application-defined systems for an efficient replication mechanism for highly scalable systems to replicate objects that are semantically related such that the relationship and ordering constraints between the related objects are retained, and the consistency at the "business object" level is preserved for propagation to the other replicas. As previously stated, state-based replication systems must transmit and apply all updates in a given consistency unit together. In systems where the granularity of these units is fixed the implementation is relatively straightforward. However, with application-defined consistency units, additional logic is required.

## SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention relates to a feature for replication in data collections that supports deployment of applications that need preservation of "business object" consistency. The invention allows applications to employ synchronization behavior that closely models business objects *in lieu* of physical rows. Applications in accordance with the subject invention model the business objects while defining scope of replication, such that replication processing can propagate the entire business object - this implies that other replicas do not have visibility to a partial image of the business object.

The present invention facilitates that the business object of changed data is propagated in whole to other replicas. Instead of propagating changes on a row-by-row or column-by-column basis, which are levels of granularity of conventional systems, the present invention supplements conventional granularity by raising a minimum level of granularity to a grouping of semantically related data at the "business object" level. When describing application-defined consistency units in the context of relational databases, this embodiment is known hereinafter as a "logical record." In one embodiment, rows and columns that make up a consistency unit are linked to a common "parent row" - a unique row in one table, where no two rows in the "parent table" can be part of the same consistency unit. The parent row is part of the application data - for example, if Order Details are linked to an Order and Orders are linked to a Customer, choosing a Customer as a common "parent row" means that all Order Details of all Orders of a given Customer (as defined by traversing the links), combined with the Customer itself, constitute a single consistency unit. (Recall that, per previous examples, Order Details records are in one table, Orders are in a second, and Customers are in a third.) Replication metadata for the consistency unit (such as any common change history) is maintained on the "parent row." The replication system maintains tight consistency by analyzing the links amongst these rows to determine the boundary of a given consistency unit, sending any updates to all rows that make up the consistency unit together, and applying all the associated updates in a single transaction on destination replicas. Thus the relationship and ordering constraints are preserved between the related rows of the consistency unit in those applications that require that all logically related records at a given time and at a given site be either wholly present or wholly absent.

In another embodiment, most or all of the application data may exist in a single table, in which case the data that the application wishes to combine into a consistency unit has no common linkage to application data in another table. This case may be common in a directory service, where the application's desired consistency unit consists of an arbitrary set of directory objects, each of which might be wholly contained in a common table. In this case, the association of related objects may be through a common key value; e.g., the value of a "consistencyUnitKey" directory attribute. Replication metadata might be stored along with one of the objects or in a private table used only by the directory replication system.

The invention utilizes a reconciliation algorithm for detection and resolution of conflicts at a consistency unit level, in addition to row or column level, and convergence of resolved data to destination replica.

To the accomplishment of the foregoing and related ends, certain illustrative aspects of the invention are described herein in connection with the following description and the annexed drawings. These aspects are indicative, however, of but a few of the various ways in which the principles of the invention may be employed and the present invention is intended to include all such aspects and their equivalents. Other advantages and novel features of the invention may become apparent from the following detailed description of the invention when considered in conjunction with the drawings.

BRIEF DESCRIPTION OF THE DRAWINGS

FIG. 1 illustrates a replication flow diagram in accordance with the present invention.
FIG. 2 illustrates a flow chart of a logical records approach of the additional logic for an application-defined consistency unit.
FIG. 3 illustrates a consistency unit of the logical records approach.
FIG. 4 illustrates a sample schema of the present invention.
FIG. 5 illustrates sample data for the example of FIG. 4.
FIG. 6 illustrates another approach to application-defined replication that separates consistency unit change tracking information into a table of its own.
FIG. 7 illustrates a block diagram of a computer operable to execute the disclosed architecture.
FIG. 8 illustrates schematic block diagram of a sample computing environment in accordance with the present invention.

DETAILED DESCRIPTION OF THE INVENTION

DEFINITIONS

The following terms are used throughout the description, the definitions of which are provided herein to assist in understanding various aspects of the subject invention.

Source replica: The data source from which the changes originate.
Destination replica: The data source to which the changes propagate.
Synchronization process: The process that synchronizes data sets from two replicas into a final convergent state.
Conflict: When the same data element is modified at two replicas, the replication system will flag the data element as a conflict.
Conflict detection: The process in synchronization that enquires metadata at source and destination replica to see if the modifications are in conflict.
Conflict resolution: The process in synchronization that decides the winner and loser of a conflict once it occurs.
Row lineage: Replication metadata that captures the change history of a row. This metadata captures the distinct updaters of a row and keeps track of their versions.
Column versions: Replication metadata that captures which versions of the columns were made by which replicas.
Tombstone metadata: Replication metadata that captures the delete of a row.
Logical record: A collection of parent and child rows that need to be propagated as a consistency unit.
Logical record link: Defines a relationship between two tables that are part of the same logical record that will be preserved during replication processing; it is similar to specifying a join between two tables. The "logical record link" names two tables, and specifies the join condition to represent the relationship between the two tables. The "logical record link" condition is usually in the form of: TABLE1 .COLUMN = TABLE2.COLUMN. The condition ensures that all rows in TABLE2 which have the same column value as in TABLE1 will be replicated as a "logical record". *E.g.*, the logical record link Customers.CustomerID = Orders.CustomerID" indicates that a given Customers row and related Orders are now part of the same logical record.
Top-level parent row: The row that acts as the parent in a logical record.
Child row: Member rows of a logical record
Logical record realignment: Modifications that cause the membership of rows in a logical record to change.
Parent identifier: The identifier of the logical record. This is typically the row identifier of the top-level parent.
Synchronization anchor: An entity that determines how out of sync two replicas are.

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

As used in this application, the terms "component" and "system" are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

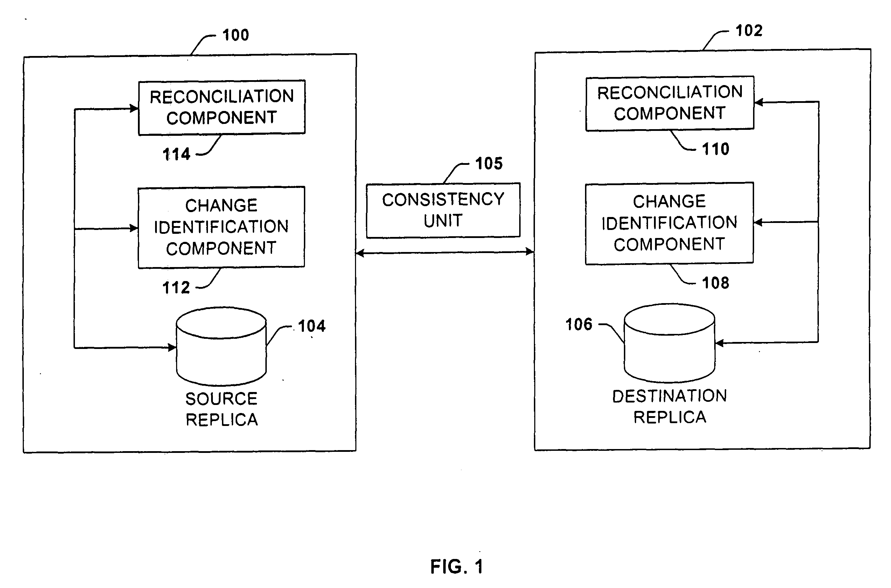

Referring now to FIG. 1, there is illustrated a replication flow diagram in accordance with the present invention. For illustration purposes, there is provided at least one homogenous data collection residing in whole or in part on each of a source location 100 and a destination location 102. In this particular embodiment, the source location 100 includes a first data collection (or source replica) 104, which may be a typical network database that is updated periodically, and which updates are synchronized a remote data collection (or destination replica) 106. The source replica 104 may be a redundant copy of the destination replica 106 in which changes are made to the source replica 104 and need to be synchronized to the destination replica 106, or a subset of the source replica 104 in which the changes are made and need to be synchronized to the destination replica 106. The homogeneous data collection can also include a directory services data structure, and any other homogeneous data collection requiring the continual updating of data across disparate data collections.

At some point in time, it is desired to reconcile or "synchronize" the source 100 and the destination 102 such that the source replica 104 transmits all of the changes to the destination replica 106. In a peer-to-peer environment, those changes received at the destination 102 may then be propagated from either the destination 102 to other remote data collections requesting synchronization, or directly from the source 100.

In furtherance thereof, the source replica 104 in association with an application, the source 100 receives one or more updates. Associated with each piece of replica data at the source 100 and destination 102 is metadata. Each change results in a metadata update to both a change unit and its associated consistency unit. The metadata of the changed data of the source replica 104 is utilized to generate a consistency unit 105of metadata of the changed data. As indicated hereinabove, the consistency unit 105 may be a single change unit. However, in accordance with a novel aspect of the present invention, the consistency unit 105contains one or more change units, the consistency unit 105 including all of the semantically related changed data records of the source replica 104.

In operation, the destination 102 periodically requests synchronization with the source 100, facilitating synchronization of the destination replica 106 with the source replica 104. When the source 100 receives the synchronization request, the source 100 enumerates an updated consistency unit 105 (first represented herein as containing changes of the source replica 104). The source 100 then enumerates all updated change units of the consistency unit 105, and bundles change units for the given consistency unit 105 for transmission to the destination 102. The destination 102 includes a destination change identification component 108 that receives and identifies the updated information. The destination 102 also includes a destination reconciliation component 110 that receives the enumerated changes from the change identification component 108, detects and resolve conflicts, and then converges the changed data to the destination replica 106. The changed data is passed as the consistency unit 105 to the destination 102 and propagated to the destination replica 106 in a single transaction.

It is to be appreciated that the labeling of a replica as a source or destination is only relevant to which is receiving and transmitting the data. Thus, in furtherance of novel aspects of the present invention, the destination 102 may receive changes from a destination application, which changes will be passed to the source 100 when synchronization occurs. The source 100 will include a source change identification component 112 and a source reconciliation component 114 for processing and propagating replica changes.

In operation, the source 100 periodically requests synchronization with the destination 102, facilitating synchronization of the source replica 104 with the destination replica 106. When the destination 102 receives the synchronization request from the source 100, the destination 102 enumerates an updated consistency unit of destination change units (also represented by the consistency unit 105, but contains changes of the destination replica 106 and is passed in the opposite direction), enumerates all updated change units of the consistency unit 105, and bundles the change units for the given consistency unit for transmission to the source 100. The source change identification component 108 receives and identifies the updated information. The source reconciliation component 114 receives the enumerated changes from the change identification component 112, detects and resolve conflicts, and then converges the changed data to the source replica 104. The changed data is passed to the source 100 and propagated to the source replica 104 in a single transaction. The bundled changes may be repeatedly replicated to the receiving replica until the synchronization process is completed.

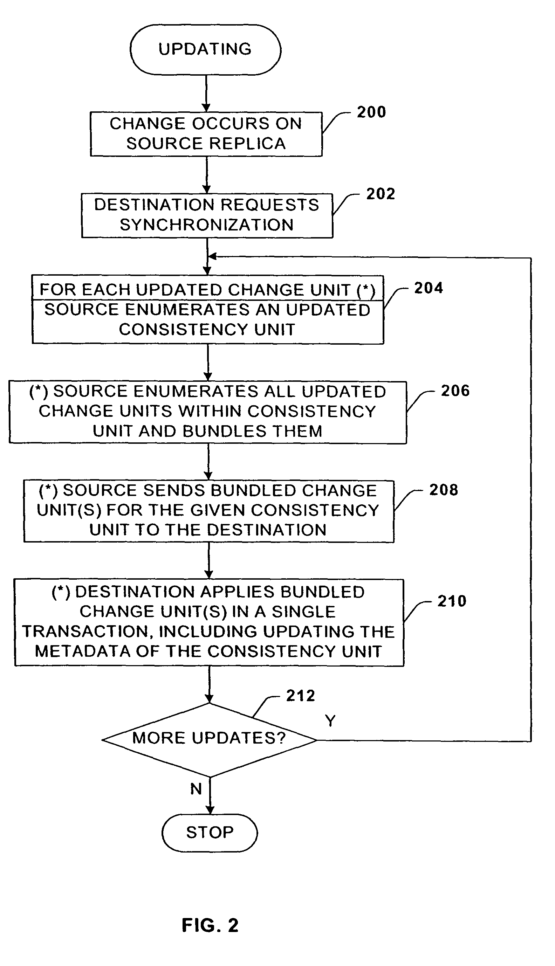

Referring now to FIG. 2, there is illustrated a flow chart of a logical records approach of the additional logic for an application-defined consistency unit 105. While, for purposes of simplicity of explanation, the methodology may be shown and described as a series of acts, it is to be understood and appreciated that the present invention is not limited by the order of acts, as some acts may, in accordance with the present invention, occur in different orders and/ or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

This approach utilizes a logical record link to define the connection (or interrelationship) between a change unit and the consistency unit to which it relates. (In conventional systems, this connection would be hard-coded - for example, if a change unit is a column and a consistency unit is a row, the consistency unit for a given change unit is the row in which the column resides.) Each consistency unit in this approach has a one-to-one relationship with a "parent row." Change tracking information is associated with each consistency unit and is recorded in the parent row. Thus the consistency unit 105 includes all of the related parent and child metadata tables of the changed records in the data collection of the first destination selected for synchronization.

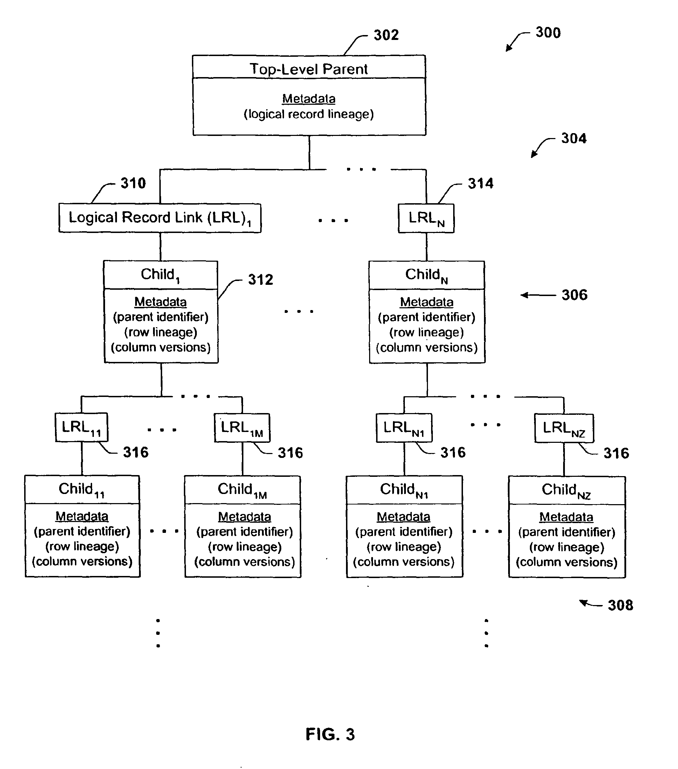

Flow begins at 200 where a change occurs on the source replica. Each change results in a metadata update to both the change unit and the associated consistency unit. When data changes occurs in a user database, the change tracking mechanism in the user database will keep track of replication metadata that then allows these changes to be synchronized with other replicas at a later point in time. At 202, the destination then requests synchronization. In response thereto, and for each updated change unit, the source enumerates an updated consistency unit, as indicated at 204. At 206, the source enumerates all updated change units within the consistency unit and bundle them. The source then sends the bundled change unit(s) for the given consistency unit to the destination, as indicated at 208. Conflict detection and resolution is performed, which is the phase of the synchronization process where the replication metadata is compared from the source and destination replicas involved in synchronization, and any conflicts are detected and resolved. At 210, the destination applies the bundled change units in a single transaction, including updating the metadata of the consistency unit. This phase of the synchronization process occurs where the changes from the source replica are propagated to the destination replica after conflict detection and resolution have been performed. At 212, a check is performed to determine if further updates are to be made. If YES, flow is back to the input of 204 to address the next change unit. If NO, flow reaches a Stop block to end the update process. Referring now to FIG. 3, there is illustrated a consistency unit 300 of the logical records approach. The object 300 includes exactly one top-level parent 302 and multiple child rows 304. A first level 306 includes child rows denoted $Child_1,...,Child_N$ that have as a parent the top-level parent 302. A second level 308 of child rows denoted $Child_{11},...,Child_{1M}$ and $Child_{N1},...,Child_{NZ}$ have as parents the child rows of the first level 306. Further level of child rows can exist but are not shown, depending upon the number of details contained within the data collection.

Each of the levels of rows is related though use of logical record link 310. Thus the logical record link 310 establishes a relationship between a first child row 312 and the top-level parent 302. Additional logical record links 314 are used to provide the logical links between the remaining child rows of the first level 306 and the top-level parent 302. Similarly, each child row of the second level 308 is related to its parents (the child rows of the upper first level 306) by respective logical record links 316. Each child row table includes metadata that that identifies its parent, row lineage information, and column version information.

There are four main phases of replication processing each of which is described in greater detail herein below: change tracking, change enumeration, conflict detection and resolution, and change application.

CHANGE TRACKING FOR LOGICAL RECORDS

When data changes occur in a user database (or data collection), the change tracking mechanism in the user database keeps track of replication metadata that then allows these changes to be synchronized with other replicas at a later point in time. One assumption of the invention is that every member of a logical record will only have the one top-level parent 302. Given any child row (310, 314, 316), it is possible to unambiguously determine the top-level parent row 302, since each logical record is composed of exactly one top-level parent row and multiple child rows. Every row that participates in replication has a row identifier that is a GUID value. If the row is a member of a logical record, a new parent identifier attribute is now maintained along with the regular replication metadata. The parent identifier for all child rows is the row identifier of the top-level parent row. The member rows that are part of the logical record have replication metadata that includes row lineage and column versions that allow row and column level conflict detection to be performed. Additionally a new attribute "logical record lineage" is maintained at the top-level parent row. This attribute contains the change history for the entire logical record. Just as the row lineage maintains an entry for every replica that updated the row using <replica_id, row_version> tuples, the logical record lineage maintains an entry for every replica that modified the logical record using the <replica_id, logical_ record_ version> tuples.

When a member row of the logical record is updated, the updated row lineage of the child row is determined as follows:

$$<\text{new row lineage}> = <\text{current row lineage}> + \text{a new entry with} <\text{current}$$

$$\text{replica\_id, max version of logical\_record\_lineage} + 1 >$$

Similarly the logical_record_lineage of the entire logical record is determined as follows:

$$<\text{new logical\_record\_lineage}> = <\text{current logical\_record\_lineage}> + \text{a new entry}$$

$$\text{with} <\text{current replica\_id, max version of logical\_record\_lineage} + 1 >$$

The following description illustrates how the change tracking mechanism modifies the replication metadata when member rows of a logical record are inserted, updated or deleted.

With respect to row insertion into a logical record, the change tracking logic first determines the parent identifier for the given row. If the metadata for the top-level parent of the "logical record" is not yet present in the metadata tables, a check must be performed to ensure that the metadata for the top-level parent row is inserted into the replication metadata tables. The "logical record lineage" of the logical record is then updated to contain a new entry that represents the "current replica" and "current max version of the logical record + 1". The above syntax captures this notion.

With respect to row updating into a logical record, the change tracking logic first determines the parent identifier for the given row. If the update to the row causes a realignment of the "logical record", then record it. This is determined by examining if the columns involved in the update are part of the "logical record link" definition. If the membership of the row in a specific logical record is not affected by the update, then the lineage of the row and the "logical record lineage" of the top-level parent row are updated to reflect the recent update. If there was logical record realignment, then the parent of the member row has been changed. In order to propagate the realignment to other replicas, record the update to the member row as a delete from the old logical record and an insert into the new logical record. If the member row has child rows that are part of the logical record, the realignment affects the child rows too.

With respect to row deletion, when a child row or parent row is deleted at a replica, the tracking logic first determines the parent identifier for the given row. The delete inherently causes the logical record to be realigned. The metadata is updated in such a manner as to process this delete along with the other changes to the logical record. The delete is recorded as a tombstone with the correct parent identifier. If the delete of the top-level parent of the logical record occurs, then this needs to be treated as if the entire logical record needs to be removed from the other replica.

LOGICAL RECORD REALIGNMENT

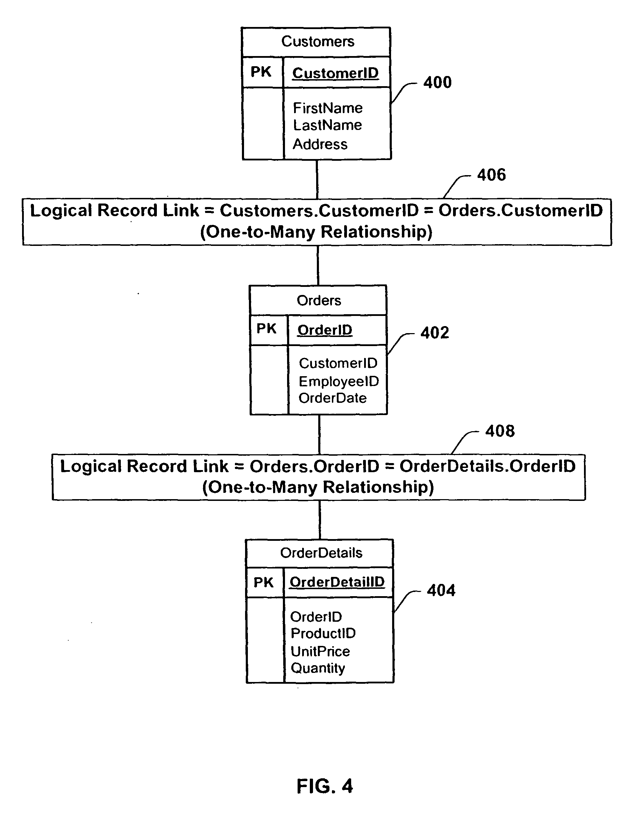

Referring now to FIG. 4, there is illustrated a sample schema of the present invention. Realignment of logical records requires the change tracking mechanism to update the metadata such that the realignment is propagated to the destination replicas in a manner that preserves the semantics of the logical record. In the example of FIG. 4, there is provided a Customers table 400 for a Customers row that is uniquely identified with a CustomerID column. The Customers table 400 also includes three columns labeled a FirstName, LastName and Address. An Orders table 402 is uniquely identified with an OrderID column. The Orders table 402 also includes three columns, a first labeled as CustomerID for mapping to the parent Customers table 100, a second column labeled EmployeeID and a last column entitled OrderDate. A third table, an OrderDetails table 404 is uniquely identified with an OrderDetailID column. The OrderDetails table 404 includes four columns: a first labeled as OrderID for mapping to the parent Orders table 402; a second column labeled ProductID, a third entitled UnitPrice, and a last column entitled Quantity.

A first logical record link 406 is established between the Customers table 400 and Orders table 402, and defined as Customers.CustomerID = Orders.CustomerID". Similarly, a second logical record link 108 is establish between the Orders table 402 and the OrderDetails table 404, and defined as Orders.OrderID = OrderDetails.OrderID. The Orders table 402 has at least two columns of data, including a CustomerID for mapping the Orders table 402 back to its parent, the Customer table 400. Other possible columns of order information are not shown. Similarly, the Order Details table 404 has at least three columns of data, including the CustomerID for mapping the Orders table 402 back to its parent, the Customer table 400, and an OrderID for mapping the OrderDetails table 404 back to its parent, the Orders table 402. Other possible columns of order details information are not shown.

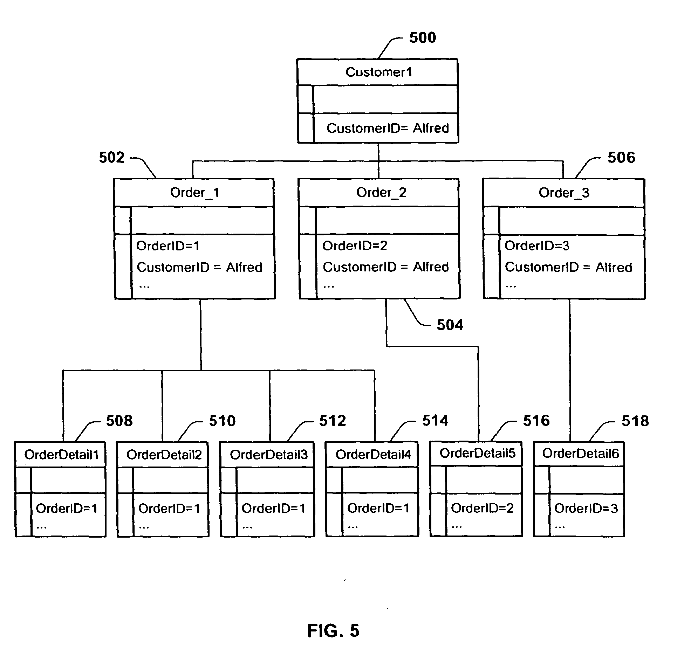

Referring now to FIG. 5, there is illustrated sample data for the example of FIG. 4. The data set includes customer, order, and order details for a customer named "Alfred". The top-level table 500 represents the row data for the Customer1 "Alfred" and contains the CustomerID column with the name "Alfred". The customer "Alfred" has three orders associated therewith: a first order table (Order_ 1 ) 502 representing the row data for Order_ 1, a second order table (Order_ 2) 504 representing the row data for Order_2, and a third order table (Order_3) 506 representing the row data for Order_3. The first orders table 502 has four child tables (508, 510, 512, and 514) that represent respectively the row data for four order details tables (OrderDetail1, OrderDetail2, OrderDetail3, OrderDetail4) associated with the order Order_1.

The second orders table 504 has one child order details table (OrderDetail5) 516 that represents the row data for the one order detail associated with the order Order_2. The third orders table 506 has one child order details table (OrderDetail6) 518 that represents the row data for the one order detail associated with the order Order_3.

Using the data of both FIG. 4 and FIG. 5, consider that the CustomerID column of the Order_1 row of the first orders table 502 is being updated such that the CustomerID which was previously "Alfred" and is now "David". This update essentially changes the membership of the Order_1 row in the "logical record" rooted at CustomerID = "Alfred". Hence the Orders row, Order_1 and the corresponding Order Details rows (OrderDetail1, OrderDetail2, OrderDetail3 and OrderDetail4) of the corresponding tables 508, 510, 512, and 514 now belong in a different "logical record" rooted at CustomerID = "David". The change tracking logic propagates the change to Order_1 and the child rows of OrderDetail1, OrderDetail2, OrderDetail3 and OrderDetail4 as deletes, with the old parent identifier "Alfred", and inserts with the new parent identifier "David".

CHANGE ENUMERATION FOR LOGICAL RECORDS

Change enumeration is the phase of the synchronization process where changes that have occurred in this replica are enumerated since the previous synchronization between the source and destination replicas.

A salient feature for enumeration of changes to logical records is that multiple changes are made to different member rows of a logical record, including updates, inserts and deletes, which should be enumerated in a group. In order to accomplish this, the change enumeration algorithm uses database views to ensure that rows in different member tables are enumerated according to the logical record link definition.

In the sample schema of FIG. 4, the membership of rows in the Orders table 402 is based upon the membership of rows in the Customers table 400 predicated using the "logical record link" definition 406 between these two tables. Similarly the membership of rows in the OrderDetails table 404 is based upon the membership of rows in the Orders table 402 predicated using the "logical record link" definition 408 between these two tables. To reflect this, the database views that are generated for child tables reference views, are generated for the immediate parent. In the sample schema, the view on the Orders table 402 references the view on the Customers table 400. Similarly the view on OrderDetails table 404 references the view on Orders table 402.

The following view definitions for the sample schema are provided for illustration purposes.

View definition for the Customers Table (view logical record Customers)
select [Customers].*, logical_record_parent_identifier = [Customers].[rowguid] from Customers
View definition for the Orders Table (view logical record Orders)
select [Orders].*, logical_record_parent_rowguid = [Customers].logical_record_parent_rowguid from [Orders], [view_logical_record_Customers] [Customers] where (Orders.CustomerID = Customers.CustomerI D)
View definition for the OrderDetails Table (view logical record OrderDetails)
select [Order_Details].*, logical_record_parent_rowguid = [Orders].logical_record_parent_rowguid from [Order_Details], [view_logical_record Orders] [Orders] where (Order_Details.OrderID = Orders.OrderID)

Using the above views, the change enumeration algorithm enumerates rows in the Customers table 400, Orders table 402, and OrderDetails table 404. The deletes for any rows in the logical record are enumerated from the replication metadata tables where the parent identifier of the delete matches the parent identifier of the logical record being enumerated. In order to only process incremental changes from the source replica that are not yet visible at the destination replica, the change enumeration is based upon the synchronization anchor that is negotiated between the source and destination replica.

CONFLICT DETECTION AND RESOLUTION

Conflict detection and resolution is the phase of the synchronization process where the replication metadata is compared from the source and destination replicas involved in synchronization and any conflicts are detected and resolved. This novel aspect of the use of logical records allows the synchronization process to detect conflicts at the logical record level, in addition to the row level or column level. Additionally, the choice of conflict resolution could be at the logical record level or row level. The decisions on what conflict detection policy and conflict resolution policy to use are left as an application choice, since the application is in a best position to decide which policy is appropriate.

CONFLICT DETECTION AND RESOLUTION - LOGICAL RECORD LEVEL

When conflict detection is at the logical record level, then a change in a column C1 of a row R1 belonging to logical record L1 on the source replica would conflict with a change in a column C2 of a row R2 belonging to the same logical record L1 on the destination replica. The logical record lineage from the source and destination replica is compared, to detect a conflict. If the conflict resolution policy chose as the winner the source replica's version of the logical record L1, the winning logical record L1 of the source replica would entirely overwrite the losing logical record L1 of the destination replica.

CONFLICT DETECTION-ROW LEVEL/RESOLUTION-LOGICAL RECORD LEVEL

When the conflict detection is at the row level, then a change in the row R1 does not conflict with a change in the row R2 even if they both belong to the same logical record L1. For the conflict to be detected at the row-level, the conflict ought to have been detected at the logical record level.

Logical record lineages from the source and destination replica are then compared, and if a conflict is indicated, the row lineages from the two replicas are compared. If the conflict resolution policy chose as the winner the source replica's version of the logical record L1, the winning logical record L1 from source replica would entirely overwrite the losing logical record L1 at the destination replica.

CONFLICT DETECTION-COLUMN LEVEL/RESOLUTION-LOGICAL RECORD LEVEL

When conflict detection is at the column level, then only a change in the same column and the same row is a conflict. For this to happen, the logical record level conflict and the row level conflict should have occurred. Thus first the logical record lineages are compared, and if they indicate a conflict, the row lineages are then compared. If the row lineage comparison indicates a conflict, then the column versions are compared to confirm if there is a conflict.

In all cases, where the conflict has not occurred at the level specified in the detection level, but has (virtually) occurred at a higher level, then the quantities at the lower level (rows in a logical record, or columns in a row) are "merged". For instance, if row-level conflict detection is in use, then a change in row R1 on one side does not conflict with a change in R2 on the other side, even if they both belong to the same logical record. This is because the conflict was detected at the "logical record level" and not at the row level, as specified by the application. The result is a "merged" logical record on both sides that retains both the changes (in R1 and R2). The replication metadata is specially updated to indicate a merged logical record lineage. The row lineages are not merged lineages, since there were unilateral changes to two different rows.

Similarly, if column-level conflict detection is in use, then a change in column C1 of a row R1 on the source replica does not conflict with a change in column C2 of the same row R1 on the destination replica. This is because the conflict was detected at the row level and not at the column level, as specified by the application. The result is a merged logical record that contains the merged value for the row R1 that reflects the column C1 changes from the source replica and column C2 changes from the destination replica. The replication metadata for the row R1 contains a merged row lineage for R1. Additionally, the logical record has a merged logical record lineage.

If a conflict is really detected at the level specified by the application, then the winning logical record lineage overwrites the losing logical record lineage, and all rows with any changes in the winning logical record are copied over to the losing side.

The following examples illustrate the different conflict detection and resolution options using a logical record with a parent row P1, and two child rows, C1 and C2. The asterisked notation C1* indicates that the C1 row was updated at a given replica. The non-asterisked notation C1 indicates that the C1 row is unchanged at the given replica. When a conflict is detected the conflict resolution policy picks the source replica or the destination replica as the winner, and the examples herein postulate the resultant values for both options.

Example 1. Detection and Resolution at the Logical Record Level-Disjoint Rows

|  | Source Replica Values | Destination Replica Values | Resultant Values, if source won | Resultant Values, if destination won |
|---|---|---|---|---|
| Parent Row | P1 | P1 | P1 | P1 |
| Child Row 1 | C1*(updated) | C1 (unchanged) | C1* | C1 |

(continued)

| | Source Replica Values | Destination Replica Values | Resultant Values, if source won | Resultant Values, if destination won |
|---|---|---|---|---|
| Child Row 2 | C2 (unchanged) | C2* (updated) | C2 | C2* |

In Example 1, two disjoint rows (Child Row 1 and Child Row 2) in the logical record have been updated. Since logical record-level detection is being performed, a conflict is detected. Moreover, since logical record-level resolution has been chosen, the entire winning logical record from either the source or destination replica will appear in the final converged result.

Example 2. Detection and Resolution at the Logical Record Level-Same Row

| | Source Replica Values | Destination Replica Values | Resultant Values if source won | Resultant Values if destination won |
|---|---|---|---|---|
| Parent Row | P1 | P1 | P1 | P1 |
| Child Row 1 | C1* | C1** | C1* | C1** |
| Child Row 2 | C2 | C2* | C2 | C2* |

In Example 2, the same row has been updated in each logical record at both source and destination replicas. Since logical record-level detection is being performed, a conflict is detected. But since logical record-level resolution has been chosen, the entire winning logical record from either the source or destination replica will appear in the final converged result.

Example 3. Row-Level Detection and Logical Record-Level Resolution-Disjoint Rows

| | Source Replica Values | Destination Replica Values | Resultant Values |
|---|---|---|---|
| Parent Row | P1 | P1 | P1 |
| Child Row 1 | C1 * (updated) | C1 (unchanged) | C1* |
| Child Row 2 | C2 (unchanged) | C2* (updated) | C2* |

In Example 3, two disjoint rows in the logical record have been updated. Since row level detection is being performed, no conflict is detected. Hence the C1 * update from the source replica and the C2* update from the destination replica appear in the final converged result.

Example 4. Row-Level Detection and Logical Record-Level Resolution-Same Rows

| | Source Replica Values | Destination Replica Values | Resultant Values if source won | Resultant Values if destination won |
|---|---|---|---|---|
| Parent Row | P1 | P1 | P1 | P1 |
| Child Row 1 | C1* | C1** | C1* | C1** |
| Child Row 2 | C2 | C2* | C2 | C2* |

In Example 4, the same rows have been updated in each logical record at both source and destination replicas. Since row level detection is being performed, a conflict is detected. But since logical record-level resolution has been chosen, the entire winning logical record from either the source or destination replica will appear in the final converged result.

Example 5. Row-Level Detection and Row-Level Resolution-Disjoint Rows

|  | Source Replica Values | Destination Replica Values | Resultant Values |
|---|---|---|---|
| Parent Row | P1 | P1 | P1 |
| Child Row 1 | C1* (updated) | C1 (unchanged) | C1* |
| Child Row 2 | C2 (unchanged) | C2* (updated) | C2* |

In Example 5, two disjoint rows in the logical record have been updated. Since row level detection is being performed, no conflict is detected. Hence the C1* update from the source replica and the C2* update from the destination replica appear in the final converged result.

Example 6. Row-Level Detection and Row-Level Resolution-Same Rows

|  | Source Replica Values | Destination Replica Values | Resultant Values if source won | Resultant Values if destination won |
|---|---|---|---|---|
| Parent Row | P1 | P1 | P1 | P1 |
| Child Row 1 | C1* | C1** | C1* | C1** |
| Child Row 2 | C2 | C2* | C2* | C2* |

In Example 6, the same rows in each the logical record have been updated at both source and destination replicas. Since row level detection is being performed, a conflict is detected. Depending on whether the source or destination won, the C1* update from the source replica or the C1** update from the destination replica appear in the final converged result. Since the C2* update from the destination replica was unilateral, it will appear in the final converged result.

CHANGE APPLICATION FOR LOGICAL RECORDS

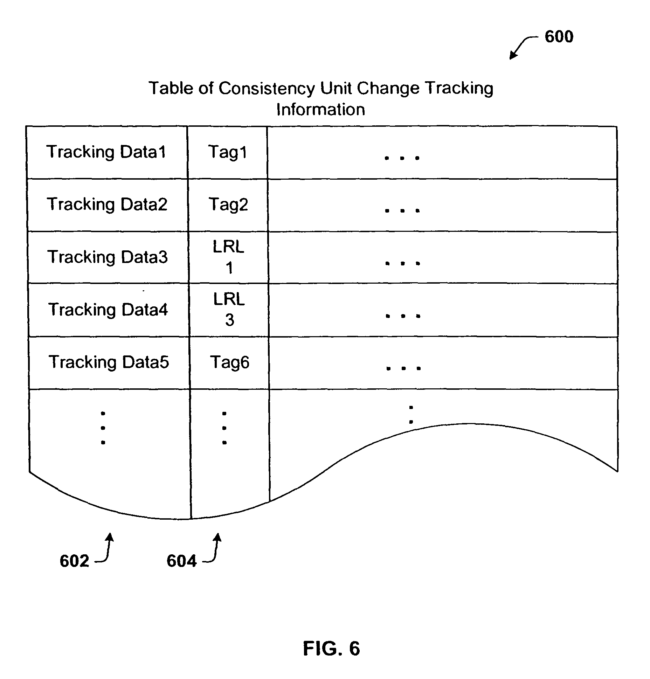

Change application is the phase of the synchronization process where the changes from one replica are propagated to the other replica after conflict detection and resolution have been performed. Since the enumeration of changes already buckets physical rows into logical records, the application of these changes at the destination replica must ensure that these changes are applied in a database transaction. Any failure in applying the transaction could result in the change application being retried, however the retries should preserve the semantics of the logical record.
Referring now to FIG. 6, there is illustrated another approach to application-defined replication that separates consistency unit change tracking information into a separate table 600. As before, each change unit is associated with exactly one consistency unit. This association may be explicit (each change unit might be tagged with a key that uniquely identifies the consistency unit of which it is a member) or implicit (as in logical record links, where the relationship might be identified by Customers.CustomerID = Orders.CustomerID). Any row of any table containing application data can thereby be associated with any consistency unit.
As with the logical records approach, it is preferable in this approach that the application places all of its application objects (a small fraction of the total objects in the directory server) into a single consistency unit for propagation to the destination replicas. This is accomplished by use of the table 600. In order to attain such results, one implementation provides that the unique tag (or GUID) is created. The tag is written as the value of a specific LDAP attribute (perhaps "consistencyUnitKey") on each application object. The act of writing the unique tag on a first application object triggers the directory server to create a new entry, *e.g.,* Tracking Data1, in a first column 602 of the consistency unit change tracking table 600 along with the associated tag value (*e.g.*, Tag1) in a second column 604. The act of updating each application object (including the first) updates the consistency unit change tracking information to signal that a new application object has been entered into the consistency unit, and the change history information on the application object to signal that application object should be replicated along with the consistency unit the next time the consistency unit is replicated as part of the consistency unit.

Similarly, the logical record link relationship (LRL) can be inserted into the table 600. The act of establishing the LRL on a second application object triggers the directory server to create a new entry, *e.g.*, Tracking Data3, in the first column 602 of the consistency unit change tracking table 600 along with the associated logical record link value, *e.g.*, LRL1, in the second column 604. The act of updating each application object (including the first) updates the consistency unit change tracking information to signal that a new application object has been entered into the consistency unit, and updates the change history information on the application object to signal that application object should be replicated along with the consistency unit the next time the consistency unit is replicated as part of the consistency unit.

An example of this approach is in the potential use of application-defined consistency units in directory services (*e.g.*, X.500 or LDAP (Lightweight Directory Access Protocol) directories). Many directory services are modeled using relatively monolithic tables; whereas in a relational model, "user" and "printer" data types would tend to be stored in type-specific tables, directory services attempt to exploit common elements between data types (such as office location or manager) in ways that tend to result in a single table 600 for all data types.

Consider an exemplary security application that uses an LDAP directory service to store routing information for authentication messages. This information includes a global configuration object and an object for each authentication server. Each authentication server object contains a pointer to its parent in the routing hierarchy. The application requires that when it assembles the authentication server objects and their parent relationships into a graph, the graph is a spanning tree - *e.g.*, that each node (authentication server) is connected directly or indirectly to every other node and that the graph has no cycles. If each authentication server object were replicated independently, and further if a change in the tree hierarchy were made on replica R1 and that change only partially replicated to replica R2, the data on R2 may no longer result in a spanning tree. For example, assume that initially there exist objects O1, O2, and 03 on replicas R1 and R2. The parent of both objects 02 and 03 is object O1, and the parent of object O1 is empty. On replica R1, an administrator changes the hierarchy (in a single transaction) such that object 02 is the root; *e.g.*, the parent of object O1 is set to object 02, the parent of object 02 is removed, and the parent of object 03 is changed to object 02. If replica R2 applies the update to object O1 in a transaction that does not apply the change to object 02, then an application reading replica R2 would see a cycle - object O2's parent is O1, and object O1's parent is 02.

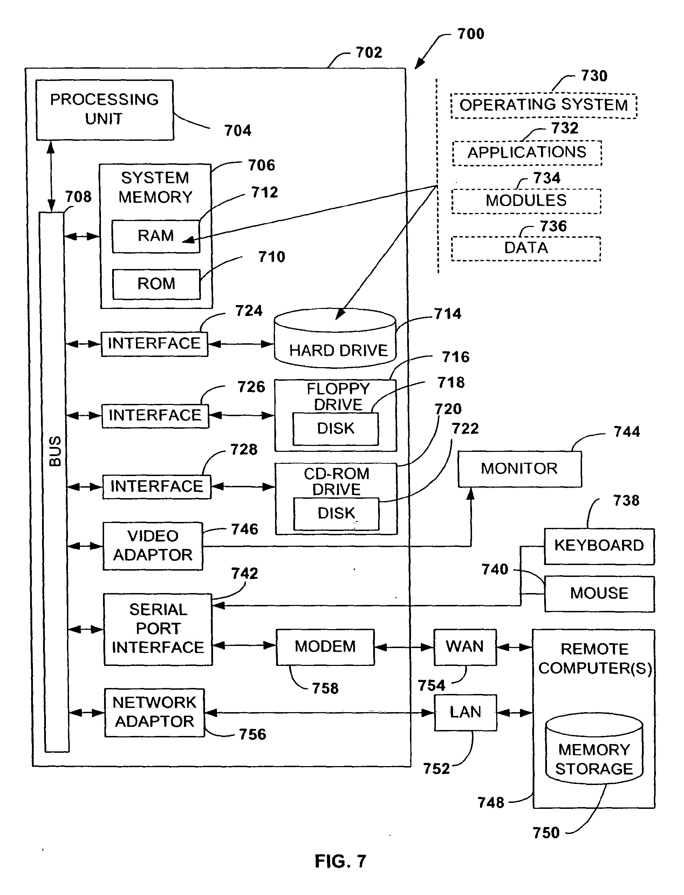

Referring now to FIG. 7, there is illustrated a block diagram of a computer operable to execute the disclosed architecture. In order to provide additional context for various aspects of the present invention, FIG. 7 and the following discussion are intended to provide a brief, general description of a suitable computing environment 700 in which the various aspects of the present invention may be implemented. While the invention has been described above in the general context of computer-executable instructions that may run on one or more computers, those skilled in the art will recognize that the invention also may be implemented in combination with other program modules and/or as a combination of hardware and software. Generally, program modules include routines, programs, components, data structures, etc., that perform particular tasks or implement particular abstract data types. Moreover, those skilled in the art will appreciate that the inventive methods may be practiced with other computer system configurations, including single-processor or multiprocessor computer systems, minicomputers, mainframe computers, as well as personal computers, hand-held computing devices, microprocessor-based or programmable consumer electronics, and the like, each of which may be operatively coupled to one or more associated devices. The illustrated aspects of the invention may also be practiced in distributed computing environments where certain tasks are performed by remote processing devices that are linked through a communications network. In a distributed computing environment, program modules may be located in both local and remote memory storage devices.

With reference again to FIG. 7, the exemplary environment 700 for implementing various aspects of the invention includes a computer 702, the computer 702 including a processing unit 704, a system memory 706, and a system bus 708. The system bus 708 couples system components including, but not limited to the system memory 706 to the processing unit 704. The processing unit 704 may be any of various commercially available processors. Dual microprocessors and other multi-processor architectures also can be employed as the processing unit 704.

The system bus 708 can be any of several types of bus structure including a memory bus or memory controller, a peripheral bus and a local bus using any of a variety of commercially available bus architectures. The system memory 706 includes read only memory (ROM) 710 and random access memory (RAM) 712. A basic input/output system (BIOS), containing the basic routines that help to transfer information between elements within the computer 702, such as during start-up, is stored in the ROM 710.

The computer 702 further includes a hard disk drive 714, a magnetic disk drive 716, (e.g., to read from or write to a removable disk 718) and an optical disk drive 720, (e.g., reading a CD-ROM disk 722 or to read from or write to other optical media). The hard disk drive 714, magnetic disk drive 716 and optical disk drive 720 can be connected to the system bus 708 by a hard disk drive interface 724, a magnetic disk drive interface 726 and an optical drive interface 728, respectively. The drives and their associated computer-readable media provide nonvolatile storage of data, data structures, computer-executable instructions, and so forth. For the computer 702, the drives and media accommodate the storage of broadcast programming in a suitable digital format. Although the description of computer-readable media above refers to a hard disk, a removable magnetic disk and a CD, it should be appreciated by those skilled in the art that other types of media which are readable by a computer, such as zip drives, magnetic cassettes, flash memory cards, digital video disks, cartridges, and the like, may also be used in the exemplary operating environment, and further that any such media may contain computer-executable instructions for performing the methods of the present invention.

A number of program modules can be stored in the drives and RAM 712, including an operating system 730, one or more application programs 732, other program modules 734, and program data 736. It is appreciated that the present invention can be implemented with various commercially available operating systems or combinations of operating systems.

A user can enter commands and information into the computer 702 through a keyboard 738 and a pointing device, such as a mouse 740. Other input devices (not shown) may include a microphone, an IR remote control, a joystick, a game pad, a satellite dish, a scanner, or the like. These and other input devices are often connected to the processing unit 704 through a serial port interface 742 that is coupled to the system bus 708, but may be connected by other interfaces, such as a parallel port, a game port, a universal serial bus ("USB"), an IR interface, etc. A monitor 744 or other type of display device is also connected to the system bus 708 *via* an interface, such as a video adapter 746. In addition to the monitor 744, a computer typically includes other peripheral output devices (not shown), such as speakers, printers etc.

The computer 702 may operate in a networked environment using logical connections to one or more remote computers, such as a remote computer(s) 748. The remote computer(s) 748 may be a workstation, a server computer, a router, a personal computer, portable computer, microprocessor-based entertainment appliance, a peer device or other common network node, and typically includes many or all of the elements described relative to the computer 702, although, for purposes of brevity, only a memory storage device 750 is illustrated. The logical connections depicted include a LAN 752 and a WAN 754. Such networking environments are commonplace in offices, enterprise-wide computer networks, intranets and the Internet.

When used in a LAN networking environment, the computer 702 is connected to the local network 752 through a network interface or adapter 756. When used in a WAN networking environment, the computer 702 typically includes a modem 758, or is connected to a communications server on the LAN, or has other means for establishing communications over the WAN 754, such as the Internet. The modem 758, which may be internal or external, is connected to the system bus 708 *via* the serial port interface 742. In a networked environment, program modules depicted relative to the computer 702, or portions thereof, may be stored in the remote memory storage device 750. It will be appreciated that the network connections shown are exemplary and other means of establishing a communications link between the computers may be used.

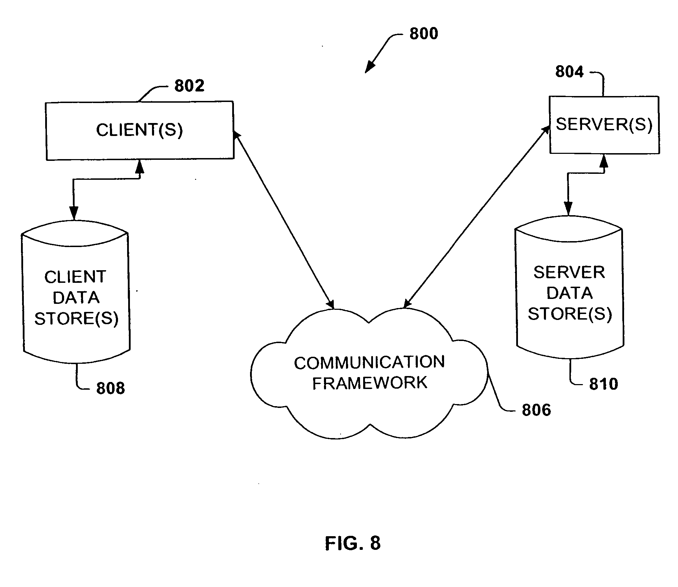

Referring now to FIG. 8, there is illustrated a schematic block diagram of a sample computing environment 800 in accordance with the present invention. The system 800 includes one or more client(s) 802. The client(s) 802 can be hardware and/or software (e.g., threads, processes, computing devices). The client(s) 802 can house cookie (s) and/or associated contextual information by employing the present invention, for example. The system 800 also includes one or more server(s) 804. The server(s) 804 can also be hardware and/or software (e.g., threads, processes, computing devices). The servers 804 can house threads to perform transformations by employing the present invention, for example. One possible communication between a client 802 and a server 804 may be in the form of a data packet adapted to be transmitted between two or more computer processes. The data packet may include a cookie and/or associated contextual information, for example. The system 800 includes a communication framework 806 that can be employed to facilitate communications between the client(s) 802 and the server(s) 804. The client(s) 802 are operably connected to one or more client data store(s) 808 that can be employed to store information local to the client (s) 802 (*e.g.* cookie(s) and/or associated contextual information). Similarly, the server(s) 804 are operably connected to one or more server data store(s) 810 that can be employed to store information local to the servers 804.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

**1.** A system that facilitates data replication, comprising:

a change tracking component that tracks metadata related to a replicated version of a consistency unit that spans across one or more homogenous collections of data; and

a reconciliation component that compares the metadata respectively, resolves conflicts using the metadata, and converges the replicated versions of the consistency unit.

2. The system of claim 1, the replicated versions of the consistency unit converged in a single transaction.

3. The system of claim 1, the metadata linked with a logical record relationship.

4. The system of claim 1, the conflicts detected in association with at least one of a logical record level, row level and column level.

5. The system of claim 4, the conflicts resolved at the logical record level by a comparison of logical record lineage metadata at a logical record level of the consistency unit and logical record lineage metadata of a logical record level of the replicated version, after which a winning logical record lineage metadata is selected according to a predetermined conflict policy.

6. The system of claim 4, the conflicts resolved at the row level by comparing respective logical record lineages of the consistency unit and the replicated version at the logical record level to detect a conflict, after which respective row lineages of the conflicting rows are compared to select a winner, the winner selected according to a predetermined conflict policy.

7. The system of claim 4, the conflicts resolved at the column level by comparing respective logical record lineages of the consistency unit and the replicated version at the logical record level to detect a conflict, after which respective row lineages of the conflicting rows are compared to detect a conflict, and in response to detecting the conflict at the row level, versions of the column data are compared to confirm the conflict exists, the conflict resolved by selecting a winning column according to a predetermined conflict policy.

8. The system of claim 4, a record at the row level including row lineage data and a record at the column level including column version data, such that conflict detection at the row level uses the row lineage data and conflict detection at the column level uses the column version data.

9. The system of claim 1, the reconciliation component resolving conflicts at a logical record level utilizing logical record metadata associated therewith, which logical record metadata includes logical record lineage data that tracks a change history for the consistency unit.

10. The system of claim 1, the reconciliation component resolving conflicts at a row level utilizing row metadata, which row metadata includes row lineage data that tracks change history of the row metadata, the history including information of at least one of the replica that updated the row and the version of the replica that updated the row.

11. The system of claim 1, the reconciliation component resolving conflicts at a column level utilizing column version metadata, which column version metadata tracks information of at least one of identity data of the replica that updated the column version and the column version.

12. The system of claim 1, wherein semantic relationships of the metadata of the consistency unit are preserved when converging of the consistency unit with the replicated version fails.

13. The system of claim 1, the reconciliation component converges data at a lower level when the conflict is detected at a higher level.

14. The system of claim 1, the conflicts resolved by the reconciliation component by selecting a winner logical record and a loser logical record in accordance with a predetermined conflict policy and overwriting the logical record lineage of the loser logical record with the logical record lineage of the winner logical record.

15. The system of claim 1, the changes in the metadata of the replicated versions tracked with the change tracking component such that the consistency unit can be converged.

16. The system of claim 1, the reconciliation component utilizing change enumeration to facilitate changes to a plurality of rows of the consistency unit, such changes including at least one of updates and, inserts and deletes.

17. The system of claim 16, the change enumeration utilizing view definitions to ensure enumeration according to a logical record link definition.

18. A computer including the system of claim 1.

19. A network of a plurality of clients and servers including the system of claim 1.

20. A method for facilitating data replication, comprising:

tracking metadata related to a replicated version of a consistency unit that spans across one or more homogenous collections of data;
comparing the metadata respectively;
resolving conflicts using the metadata; and
converging the replicated versions of the consistency unit.

21. The method of claim 20, the replicated versions of the consistency unit converged in a single transaction.

22. The method of claim 20, further comprising the step of linking the metadata with a logical record relationship.

23. The method of claim 20, further comprising the step of detecting the conflicts in association with at least one of a logical record level, row level and column level.

24. The method of claim 23 resolving conflicts at the logical record level by,
comparing logical record lineage metadata at a logical record level of the consistency unit and logical record lineage metadata of a logical record level of the replicated version; and
selecting a winning logical record lineage metadata according to a predetermined conflict policy.

25. The method of claim 23 resolving conflicts at the row level by further,
comparing respective logical record lineages of the consistency unit and the replicated version at the logical record level to detect a conflict; and
comparing respective row lineages of the conflicting rows; and
selecting a winner according to a predetermined conflict policy.

26. The method of claim 23 resolving conflicts at the column level by further,
comparing respective logical record lineages of the consistency unit and the replicated version at the logical record level to detect a conflict;
comparing respective row lineages of the conflicting rows to detect a conflict;
comparing versions of the column data to confirm the conflict exists; and
selecting a winning column according to a predetermined conflict policy.

27. The method of claim 23, a record at the row level including row lineage data and a record at the column level including column version data, such that conflict detection at the row level uses the row lineage data and conflict detection at the column level uses the column version data.

28. The method of claim 20 resolving conflicts at a logical record level utilizing logical record metadata associated therewith, which logical record metadata includes logical record lineage data that tracks a change history for the consistency unit.

29. The method of claim 20 resolving conflicts at a row level utilizing row metadata, which row metadata includes row lineage data that tracks change history of the row metadata, the history including information of at least one of the replica that updated the row and the version of the replica that updated the row.

30. The method of claim 20 resolving conflicts at a column level utilizing column version metadata, which column version metadata tracks information of at least one of identity data of the replica that updated the column version and the column version.

31. The method of claim 20, wherein semantic relationships of the metadata of the consistency unit are preserved when converging of the consistency unit with the replicated version fails.

32. The method of claim 20 converging data at a lower lever when the conflict is detected at a higher level.

33. The method of claim 20 resolving conflicts by further,
    selecting a winner logical record and a loser logical record in accordance with a predetermined conflict policy; and
    overwriting the logical record lineage of the loser logical record with the logical record lineage of the winner logical record.

34. The method of claim 20, further comprising the step of tracking changes in the metadata of the replicated versions with a change tracking component such that the consistency unit can be converged.

35. The method of claim 20, further comprising the step of enumerating changes to facilitate changing a plurality of rows of the consistency unit, such changes including at least one of updates and, inserts and deletes.

36. The method of claim 35, further comprising the step of providing view definitions to ensure enumeration according to a logical record link definition.

37. A method of facilitating data replication, comprising:

    tracking semantically-related data changes between a source data collection and a first destination data collection of a homogenous collection of data;
    linking metadata associated with the semantically-related data changes according to a logical record relationship to form a consistency unit; and
    converging the consistency unit of data changes with a second destination data collection of the homogenous data collection in a single transaction.

38. The method of claim 37, further comprising:

    detecting conflicts by comparing changes of the consistency unit with the second destination data collection; and
    resolving the conflicts by selecting a winner according to a predetermined conflict policy.

39. The method of claim 38, the conflict detected in association with at least one of a logical record level, row level and column level.

40. The method of claim 39, the conflict detected and resolved at each of the logical record level, row level, and column level by first comparing respective logical record lineages of the source data collection and second destination data collection.

41. The method of claim 39, a record at the row level including row lineage data and a record at the column level including column version data, such that conflict detection at the row level uses the row lineage data and conflict detection at the column level uses the column version data.

42. The method of claim 40, wherein semantics of the semantically related changes are preserved when converging of the consistency unit is retried.

43. The method of claim 38, further comprising converging the data at a lower level when the conflict is detected at a higher level.

44. The method of claim 37, further comprising the step of detecting and resolving a conflict between the data consistency unit and the second destination data collection, the conflict resolved by selecting a winner logical record and a loser logical record in accordance with a predetermined conflict policy and overwriting the logical record lineage of the loser with the logical record lineage of the winner.

45. The method of claim 37, further comprising the step of tracking changes in the first destination data collection with a change tracking component, which change tracking component tracks replication metadata such that the consistency unit of data changes can be converged with the second destination data collection.

**46.** The method of claim 37, the data collection is a relational database.

**47.** A system for facilitating data replication, comprising:

means for identifying semantically-related data changes between a source data collection and a first destination data collection of a homogenous collection of data;
means for linking metadata associated with the semantically-related data changes according to a logical record relationship to form a consistency unit; and
means for converging the consistency unit of data changes with a second destination data collection of the homogenous data collection in a single transaction.

**48.** A system for facilitating data replication, comprising:

means for identifying metadata related to a replicated version of a consistency unit that spans across one or more homogenous collections of data;
means for comparing the metadata respectively;
means for resolving conflicts using the metadata; and
means for converging the replicated versions of the consistency unit.

**49.** A method of facilitating data replication, comprising:

identifying data changes between a source data collection and a first destination data collection;
creating a table of consistency unit change tracking information that is propagated to a second destination as a consistency unit; and
converging the consistency unit of data changes with a second destination data collection in a single transaction.

**50.** The method of claim 49, the table including at least one of a unique tag and a logical record link each defining an association between a change unit and a consistency unit.

**51.** The method of claim 50, further comprising the step of updating the table in response to writing the unique tag at the first destination data collection.

**52.** The method of claim 49, source data collection representative of a directory services architecture.

FIG. 1

UPDATING

CHANGE OCCURS ON
SOURCE REPLICA — 200

DESTINATION REQUESTS
SYNCHRONIZATION — 202

FOR EACH UPDATED CHANGE UNIT (*)
SOURCE ENUMERATES AN UPDATED
CONSISTENCY UNIT — 204

(*) SOURCE ENUMERATES ALL UPDATED
CHANGE UNITS WITHIN CONSISTENCY
UNIT AND BUNDLES THEM — 206

(*) SOURCE SENDS BUNDLED CHANGE
UNIT(S) FOR THE GIVEN CONSISTENCY
UNIT TO THE DESTINATION — 208

(*) DESTINATION APPLIES BUNDLED
CHANGE UNIT(S) IN A SINGLE
TRANSACTION, INCLUDING UPDATING THE
METADATA OF THE CONSISTENCY UNIT — 210

MORE UPDATES? — 212

Y

N

STOP

**FIG. 2**

**FIG. 3**

| Customers | |
|---|---|
| **PK** | <u>**CustomerID**</u> |
| | FirstName<br>LastName<br>Address |

— 400

— 406

Logical Record Link = Customers.CustomerID = Orders.CustomerID
(One-to-Many Relationship)

| Orders | |
|---|---|
| **PK** | <u>**OrderID**</u> |
| | CustomerID<br>EmployeeID<br>OrderDate |

— 402

— 408

Logical Record Link = Orders.OrderID = OrderDetails.OrderID
(One-to-Many Relationship)

| OrderDetails | |
|---|---|
| **PK** | <u>**OrderDetailID**</u> |
| | OrderID<br>ProductID<br>UnitPrice<br>Quantity |

— 404

**FIG. 4**

500

| Customer1 |
|---|
| |
| CustomerID= Alfred |

502

| Order_1 |
|---|
| |
| OrderID=1<br>CustomerID = Alfred<br>... |

| Order_2 |
|---|
| |
| OrderID=2<br>CustomerID = Alfred<br>... |

506

| Order_3 |
|---|
| |
| OrderID=3<br>CustomerID = Alfred<br>... |

504

508

| OrderDetail1 |
|---|
| |
| OrderID=1<br>... |

510

| OrderDetail2 |
|---|
| |
| OrderID=1<br>... |

512

| OrderDetail3 |
|---|
| |
| OrderID=1<br>... |

514

| OrderDetail4 |
|---|
| |
| OrderID=1<br>... |

516

| OrderDetail5 |
|---|
| |
| OrderID=2<br>... |

518

| OrderDetail6 |
|---|
| |
| OrderID=3<br>... |

**FIG. 5**

600

### Table of Consistency Unit Change Tracking Information

| Tracking Data1 | Tag1 | . . . |
|---|---|---|
| Tracking Data2 | Tag2 | . . . |
| Tracking Data3 | LRL 1 | . . . |
| Tracking Data4 | LRL 3 | . . . |
| Tracking Data5 | Tag6 | . . . |
| ⋮ | ⋮ | ⋮ |

602 ⤴    604 ⤴

## FIG. 6

FIG. 7

FIG. 8